# EUROPÄISCHE PATENTSCHRIFT

(11) **EP 0 631 990 B1**
(45) Veröffentlichungstag und Bekanntmachung des Hinweises auf die Patenterteilung: **12.05.1999**
(21) Anmeldenummer: 94108601.9
(22) Anmeldetag: 06.06.1994
(51) Int. Cl.: C03B 3/02

(54) **Verfahren und Vorrichtung zum Vorwärmen von Beschickungsgut für Glas-Schmelzöfen**
Method and apparatus for pre-heating batch for a glass-melting furnace
Procédé et appareil pour le préchauffage de la matière première pour un four de fusion de verre

(30) Priorität: 16.06.1993 DE 4319691
(43) Veröffentlichungstag der Anmeldung: 04.01.1995
(73) Patentinhaber: Beteiligungen Sorg GmbH & Co. KG, D-97816 Lohr (DE)
(72) Erfinder: Sorg, Helmut, Dipl.-Ing., D-63864 Glattbach (DE)
(74) Vertreter: Zapfe, Hans, Dipl.-Ing.

(56) Entgegenhaltungen:
- DE-A- 2 905 089
- DE-A- 4 000 358
- US-A- 4 349 367
- US-A- 4 615 718

## Beschreibung

Die Erfindung betrifft ein Verfahren zum Vorwärmen von Glas und organische Beimengungen enthaltendem Beschickungsgut in einem indirekten Wärmetauscher, der mindestens einen Vorwärmschacht und eine an diesen angrenzende Heizkammer aufweist, auf Temperaturen bis maximal knapp unterhalb der Erweichungstemperatur des Glases zum nachfolgenden Einlegen in einen Glas-Schmelzofen unter Führung des Beschickungsguts in dem mindestens einen Vorwärmschacht und durch Beaufschlagung der Heizkammer mit Abgasen aus dem Glas-Schmelzofen.

Bei indirekten Wärmetauschern sind die wärmeabgebenden und die wärmeaufnehmenden Medien voneinander getrennt, um eine Vermischung zu verhindern.

Es ist auch im Zusammenhang mit Glas-Schmelzöfen bekannt, das Beschickungsgut, zu dessen Komponenten Glasbildner, das sogenannte Gemenge, ebenso gehören wie beispielsweise Scherben aus Altglas, in indirekten Wärmetauschern mittels der Abgase aus dem Schmelzofen aufzuheizen, um beispielsweise die Niederschlagung von unerwünschten Begleitstoffen in den Abgasen auf dem Beschickungsgut zu vermeiden. Diese Maßnahme ist solange nicht von Problemen begleitet, wie das Beschickungsgut allenfalls Wasser enthält. So enthält das Gemenge üblicherweise bis zu etwa 4 % Wasser, die Scherben etwa 1 bis 1,5 % Wasser. Das Wasser tritt üblicherweise als Wasserdampf aus dem Beschickungsgut aus, und es verursacht keine besonderen Probleme, wenn der Wasserdampf an die Umgebung gelangt. Dies ist ohne besondere Maßnahmen auch nicht zu verhindern, da der Wärmetauscher an den Ein- und Austrittsstellen für das Beschickungsgut Öffnungen aufweist, durch die der Wasserdampf austreten kann. Die Vorwärmung von Beschickungsgut mit Altglas wirft dann jedoch Probleme auf, wenn das Altglas organische Beimengungen bzw. Begleitstoffe enthält, deren vorherige Entfernung entweder schwierig oder zumindest kostenintensiv ist, und die beim Vorwärmen auf die üblichen Vorwärmtemperaturen einem Schwelprozeß unterliegen, der zur Bildung von Gasen und Dämpfen führt, die aufgrund von Umwelt-Schutzbestimmungen nicht an die Atmosphäre gelangen dürfen.

Zu diesen organischen Beimengungen gehören Papier, Kunststoffe und Kleber von Etiketten, Kunststoffbeschichtungen von Flaschen, aus Kunststoff bestehende Verschlußkapseln für Flaschen, aber auch Verunreinigungen, die durch Reste des ursprünglichen Inhalts gebildet werden. Schließlich gehören zu den organischen Begleitstoffen auch Korken.

Die Vorwärmtemperaturen für das Beschickungsgut werden aus wirtschaftlichen Gründen möglichst hoch gewählt, und zwar nach Möglichkeit bis knapp unter diejenige Temperatur, bei der das Beschickungsgut zur Klumpenbildung neigt. Dieser Vorgang tritt bei Anwesenheit von Glasscherben oberhalb der Erweichungstemperatur des Glases ein, weshalb man die Vorwärmung im allgemeinen bei Temperaturen von maximal etwa 550 °C beendet.

Bei derartigen Temperaturen findet aber bereits ein Schwelprozeß statt, bei dem nichtfilterbare gas- oder dampfförmige Verbindungen gebildet werden wie Kohlenmonoxid, organische Crackprodukte, Dioxine, Furane und die gefürchteten Fluor-Chlor-Kohlenwasserstoffe. Diese Gase und Dämpfe treten ohne besondere Maßnahmen auch aus einem indirekten Wärmetauscher aus, weil in dem üblicherweise vorhandenen Vorwärmschacht eine Kaminwirkung entsteht.

Durch die DE-PS 29 32 052 ist es bekannt, Glasrohstoffe und Abfallglas, das schädliche organische Stoffe enthält, an unterschiedlichen Stellen in die Glasschmelze eines Schmelzofens einzuführen und die Atmosphäre im Schmelzofen so zu steuern, daß am Aufgabeort des Abfallglases mit den organischen Begleitstoffen eine oxydierende Atmosphäre mit hoher Temperatur vorliegt, so daß die organischen Substanzen im Glas-Schmelzofen selbst verbrannt werden. Die Aufrechterhaltung einer stabilen Verfahrensführung ist jedoch aufwendig, und es läßt sich trotzdem nicht verhindern, daß sich kohlenstoffhaltige Scheren in der Glasschmelze bilden, die schließlich zu unbrauchbaren Endprodukten führen. Auch ist die Energiebilanz eines solchen Schmelzprozesses unbefriedigend, da das Altglas, dessen Anteil am Beschickungsgut in der Regel deutlich überwiegt, nicht vorgewärmt wird. Es handelt sich mithin um ein gattungsfremdes Verfahren.

Durch die US-PS 5 156 545 ist ein weiteres gattungsfremdes Verfahren bekannt, das primär dafür vorgesehen ist, Glasfasern, die mit organischen Stoffen verunreinigt sind, durch einen Pyrolyseprozeß in der Weise aufzubereiten, daß sie für das Wiederaufschmelzen in einem Glas-Schmelzofen verwendet werden können. Hierbei handelt es sich jedoch nicht um einen Vorwärmprozeß, denn es ist zugelassen, daß das Endprodukt der Aufbereitung auf Halde gefördert wird. Der Pyrolyseprozeß wird in einer relativ losen Schüttung durchgeführt, die mittels eines Bandförderers durch eine Verbrennungskammer geführt wird. Auch hierbei muß einer Verklebungsneigung des Beschickungsmaterials durch die Begrenzung der Temperatur entgegengewirkt werden, so daß die Temperatur unterhalb 550 °C gehalten werden muß. Bezüglich des für die Pyrolyse benötigten Gases ist lediglich angegeben, daß dieses weniger als 10 % Sauerstoff enthalten soll, um örtliche Temperaturspitzen zu vermeiden, die zu einer Verklebungsneigung des Beschickungsguts führen könnten. Da hierbei eine vollständige Pyrolyse nicht möglich ist, wird angegeben, die Abgase des Prozesses einer Gasaufbereitungsanlage zuzuführen und das solchermaßen aufbereitete Gas gegebenenfalls im Kreislauf zu führen. Ferner ist angegeben, daß die Pyrolysegase einer Nachverbrennung in einer besonderen Verbrennungskammer zugeführt werden sollen. Eine Verbindung der Energiebilanz des Pyrolyseprozesses mit derjenigen des Glas-Schmelzofens ist offensichtlich nicht vorgesehen. Die Verfahrensführung ist daher auch hinsichtlich der Vorrichtung aufwendig und kostspielig und nur für besondere Abfallprodukte geeignet, nicht aber für einen üblichen Glas-Schmelzprozeß.

Der Erfindung liegt daher die Aufgabe zugrunde, ein Verfahren der eingangs beschriebenen Gattung dahingehend weiterzuentwickeln, daß auch Beschickungsgut mit organischen Beimengungen der eingangs angegebenen Art auf relativ hohe Temperaturen vorgewärmt werden kann, ohne daß die Zerfallsprodukte der organischen Beimengungen, die sogenannten Schwelgase, an die Atmosphäre gelangen können und ohne daß aufwendige Gasumwälzeinrichtungen und/oder eine Nachverbrennung in besonderen Verbrennungsaggregaten durchgeführt werden müßte. Insbesondere soll hierbei aber ein hoher Anteil der in den Abgasen des Glas-Schmelzofens enthaltenen Energie durch den Vorwärmprozeß zurückgewonnen werden.

Die Lösung der gestellten Aufgabe erfolgt bei dem eingangs angegebenen Verfahren erfindungsgemäß dadurch, daß die aus den organischen Beimengungen gebildeten Gase und Dämpfe mindestens teilweise, vorzugsweise aber vollständig, aus dem Wärmetauscher außerhalb der Glasschmelze in den Glas-Schmelzofen eingeführt werden.

Durch diese Maßnahme ist es nicht erforderlich, einen besonderen Nächverbrenner oder einen Gaskreislauf für das Beschickungsgut vorzusehen, sondern der Glas-Schmelzofen selbst dient als Verbrennungsaggregat für die aus den organischen Beimengungen gebildeten Gase und Dämpfe. Da in einem solchen Glas-Schmelzofen üblicherweise Temperaturen zwischen 1100 und 1600 °C vorliegen und bei der Verwendung von Brennern teilweise sehr heiße Flammen gebildet werden, werden die besagten Gase und Dämpfe zu weitgehend unschädlichen Verbindungen verbrannt, die zusammen mit dem Abgas des Glas-Schmelzofens an die Atmosphäre abgeführt werden können. Es versteht sich, daß diese Abgase gegebenenfalls noch durch besondere Filter- und Gaswaschanlagen hindurchgeleitet werden können, die Verbrennungsprodukte aus den organischen Beimengungen stellen aber für diese Abgas-Reinigungseinrichtungen keine besondere zusätzliche Belastung dar.

Es ist dabei besonders vorteilhaft, wenn die Freisetzung der Gase und Dämpfe aus den organischen Beimengungen im Wärmetauscher bei einem Druck durchgeführt wird, der unter dem Umgebungsdruck liegt. Dies ist auf einfache Weise dadurch möglich, daß in einer für diesen Zweck vorgesehenen Schwelgas-Leitung ein Sauggebläse angeordnet wird, das in dem Vorwärmschacht des Wärmetauschers einen Unterdruck erzeugt. Hierdurch wird nicht nur verhindert, daß die freigesetzten Gase und Dämpfe an die Umgebung gelangen können, sondern es wird auch in einem durch konstruktive Maßnahmen beeinflußbaren Umfang eine geringe Menge Umgebungsluft von außen in den Wärmetauscher angesaugt und zusammen mit den Schwelgasen dem Glas-Schmelzofen zugeführt.

Es ist dabei besonders vorteilhaft, wenn das Beschickungsgut im Wärmetauscher in dem mindestens einen senkrecht angeordneten Vorwärmschacht von oben nach unten geführt wird und wenn die Gase und Dämpfe aus dem unteren Bereich dieses mindestens einen Vorwärmschachtes abgesaugt werden. Im unteren Bereich des Vorwärmschachtes besitzt das Beschickungsgut nämlich die höchste Temperatur, insbesondere dann, wenn das Abgas aus dem Glas-Schmelzofen im Gegenstrom durch die Heizkammer geführt wird, d.h. von unten nach oben.

Es ist dabei weiterhin von Vorteil, wenn Wasserdampf aus dem Beschickungsgut an einer Stelle des mindestens einen Vorwärmschachts abgesaugt wird, die sich oberhalb der für die übrigen Gase und Dämpfe vorgesehenen Absaugestelle im Bereich einer Temperatur befindet, an der noch keine Zersetzung der organischen Beimengungen stattgefunden hat. Es ist in diesem Falle möglich, den Wasserdampf unmittelbar an die Atmosphäre zu leiten.

Zwar ist es grundsätzlich möglich, auch den Wasserdampf dem Glas-Schmelzofen zuzuführen, jedoch verschlechtert sich hierdurch die Energiebilanz des Ofens geringfügig. Der Verbleib des Wasserdampfes hängt also nicht zuletzt davon ab, welche Auflagen bezüglich der Umweltbelastung zu erfüllen sind.

Die aus dem Beschickungsgut freigesetzten Gase und Dämpfe können dem Glas-Schmelzofen an verschiedenen Stellen zugeführt werden, beispielsweise in die zugeführte Verbrennungsluft, in den Brennraum des Glas-Schmelzofens und/oder in einen Brenner, beispielsweise dann, wenn dieser mit koaxialen Brennerrohren ausgeführt ist.

Es ist mit zusätzlichem Erfolg auch möglich, die Abgase aus dem Glas-Schmelzofen vor dem Eintritt in den indirekten Wärmetauscher über einen Regenerativ- oder Rekuperativ-Wärmetauscher zu führen.

Die Erfindung betrifft schließlich auch eine Vorrichtung zum Durchführen des eingangs angegebenen Verfahrens mit einem indirekten Wärmetauscher, der mindestens einen Vorwärmschacht für die Durchleitung des Beschickungsguts und eine an den Vorwärmschacht angrenzende und von diesem getrennte Heizkammer für die Durchleitung eines Heizmediums aufweist, wobei dem Wärmetauscher ein Glas-Schmelzofen nachgeschaltet ist, dessen Abgasleitung der Heizkammer des Wärmetauschers aufgeschaltet ist und dessen Einlegeöffnung mit dem mindestens einen Vorwärmschacht durch eine Fördereinrichtung verbunden ist.

Zur Lösung der gleichen Aufgabe ist der mindestens eine Vorwärmschacht über eine Schwelgas-Leitung außerhalb der Glasschmelze mit dem Glasschmelzofen verbunden.

Weitere vorteilhafte Ausgestaltungen des Erfindungsgegenstandes ergeben sich aus den übrigen Unteransprüchen.

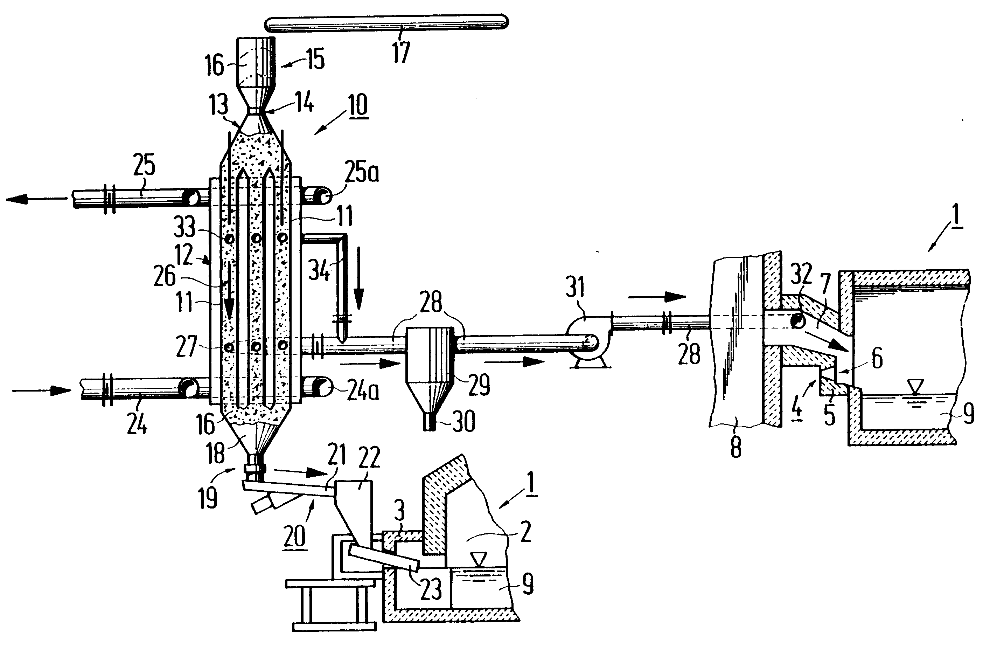

Ein Ausführungsbeispiel des Erfindungsgegenstandes wird nachfolgend anhand der einzigen Figur näher erläutert, die ein Fließschema einer Vorwärmeinrichtung in Verbindung mit einem Glas-Schmelzofen zeigt.

In der Figur sind zwei Teilschnitte durch ein und denselben Glas-Schmelzofen 1 gezeigt, nämlich links unten ein Axialschnitt durch den Einlegebereich 2 des Ofens, zu dem eine nicht näher bezeichnete Einlegeöffnung gehört, die in einem sogenannten "Dog-House" 3 angeordnet ist, und in der rechten Hälfte ein Querschnitt im Bereich eines Brenners 4, von dem hier nur der Düsenstein 5 mit seiner Brenneröffnung 6 dargestellt ist. Oberhalb der Brenneröffnung 6 befindet sich eine Luftzufuhröffnung 7, durch die Verbrennungsluft in Richtung des Pfeils einströmt. Auch die Verbrennungsluft ist durch einen Luftvorwärmer 8 vorgeheizt, von dem gleichfalls nur ein Teilausschnitt gezeigt ist. Zu dem Glas-Schmelzofen 1 gehört eine Schmelzwanne 9. Derartige Einzelheiten sind jedoch Stand der Technik, so daß hierauf nicht weiter eingegangen wird.

Dem Glas-Schmelzofen 1 vorgeschaltet ist ein indirekter Wärmetauscher 10, zu dem drei senkrechte Vorwärmschächte 11 und eine Heizkammer 12 gehören, deren Volumina durch die Wände der Vorwärmschächte 11 voneinander getrennt sind. Die Vorwärmschächte 11 gehen von einer Verteileinrichtung 13 aus, die über eine Dosier- und Chargierschleuse 14 mit einem Vorratsbehälter 15 verbunden ist , in dem sich das Beschickungsgut 16 befindet. Der Vorratsbehälter wird durch einen Bandförder 17 mit dem Beschickungsgut versorgt, das im vorliegenden Falle aus einem Gemisch von Scherben und Gemenge besteht.

Am unteren Ende des Wärmetauschers 10 sind die Vorwärmschächte 11 durch eine Sammelvorrichtung 18 vereint, die die Form eines Trichters hat, und deren Austragsöffnung 19 zu einer Fördereinrichtung 20 führt, zu der eine Vibrations-Förderrinne 21 gehört. Diese mündet wiederum in einen Zwischenbehälter 22, der mit einer Einlegevorrichtung 23 verbunden ist, durch die das vorgewärmte Beschickungsgut streifenweise auf die Glasschmelze in der Schmelzwanne 9 eingelegt wird.

Die Heizkammer 12 ist an ihrem unteren Ende mit einer Abgasleitung 24 verbunden, zu der eine Ringleitung 24a gehört, die über nicht gezeigte Abzweigleitungen mit der Heizkammer 12 verbunden ist. Die Abgasleitung 24 kommt vom Glas-Schmelzofen 1.

Das obere Ende der Heizkammer 12 ist über eine analoge Ringleitung 25a mit einer weiteren Abgasleitung 25 verbunden, die zu einem hier nicht gezeigten Kamin führt. Auf diese Weise wird das Abgas in der Heizkammer 12 im Gegenstrom zu dem Beschickungsgut in den Vorwärmschächten geführt, dessen Bewegungsrichtung durch den Pfeil 26 angedeutet ist.

Die Vorwärmschächte 11 besitzen in ihrem unteren Bereich Abzugsöffnungen 27, die in eine gemeinsame Schwelgas-Leitung 28 münden. In dieser Schwelgas-Leitung 28 befindet sich für die Abtrennung eventueller Feststoff-Partikel ein Zyklonabscheider 29 mit einer verschließbaren Austragsöffnung 30. Im weiteren Verlauf der Schwelgas-Leitung 28 ist ein Sauggebläse 31 angeordnet, durch das die Schwelgase unter Bildung eines geringen Unterdrucks in den Vorwärmschächten aus diesen abgesaugt werden. Vom Sauggebläse 31 führt ein weiterer Teilabschnitt der Schwelgas-Leitung 28 zur Luftzufuhröffnung 7, in der sich eine Eintrittsöffnung 32 für das Schwelgas befindet. Von hier aus wird das Schwelgas durch die Verbrennungsluft in das innere des Glas-Schmelzofens 1 geführt. Und dort restlos verbrannt.

Im oberen Bereich der Vorwärmschächte 11 besitzen diese Abzugsöffnungen 33 für den Wasserdampf. Diese Abzugsöffnungen befinden sich an einer Stelle solcher Temperatur, bei der noch keine Zersetzung der organischen Beimengungen bewirkt wird. Die Abzugsöffnungen 33 münden in eine gemeinsame Saugleitung 34, die in der dargestellten Weise mit der Schwelgas-Leitung 28 verbunden sein kann. Es ist aber auch möglich, die Saugleitung 34 unmittelbar an den nicht gezeigten Kamin anzuschließen. Die Heizkammer 12 umgibt die Vorwärmschächte 11, so daß ein intensiver Wärmedurchgang durch die Wände der Vorwärmschächte 11 gewährleistet ist. Wie bereits gesagt, findet der Wärmeaustausch im Gegenstrom statt, so daß die höchste Temperatur im Beschickungsgut 16 im unteren Bereich der Vorwärmschächte 11 auftritt.

## Patentansprüche

1. Verfahren zum Vorwärmen von Glas und organische Beimengungen enthaltendem Beschickungsgut (16) in einem indirekten Wärmetauscher (10), der mindestens einen Vorwärmschacht (11) und eine an diesen angrenzende Heizkammer (12) aufweist, auf Temperaturen bis maximal knapp unterhalb der Erweichungstemperatur des Glases zum nachfolgenden Einlegen in einen Glas-Schmelzofen (1) unter Führung des Beschickungsguts (16) in dem mindestens einen Vorwärmschacht (11) und durch Beaufschlagung der Heizkammer (12) mit Abgasen aus dem Glas-Schmelzofen (1), **dadurch gekennzeichnet**, daß die aus den organischen Beimengungen gebildeten Gase und Dämpfe mindestens teilweise aus dem Wärmetauscher (10) außerhalb der Glasschmelze in den Glas-Schmelzofen (1) eingeführt werden.

2. Verfahren nach Anspruch 1, **dadurch gekennzeichnet**, daß die Freisetzung der Gase und Dämpfe aus den organischen Beimengungen bei einem Druck durchgeführt wird, der unter dem Umgebungsdruck liegt.

3. Verfahren nach Anspruch 2, **dadurch gekennzeichnet**, daß das Beschickungsgut (16) im Wärmetauscher (10) in dem mindestens einen senkrecht angeordneten Vorwärmschacht (11) von oben nach unten geführt wird und daß die Gase und Dämpfe aus dem unteren Bereich dieses mindestens einen Vorwärmschachtes (11) abgesaugt werden.

4. Verfahren nach Anspruch 3, **dadurch gekennzeichnet**, daß Wasserdampf aus dem Beschickungsgut (16) an einer Stelle des mindestens einen Vorwärmschachtes (11) abgesaugt wird, die sich oberhalb der für die übrigen Gase und Dämpfe vorgesehenen Absaugestelle (27) im Bereich einer Temperatur befindet, an der noch keine Zersetzung der organischen Beimengungen stattgefunden hat.

5. Verfahren nach Anspruch 1, **dadurch gekennzeichnet**, daß die aus dem Beschickungsgut freigesetzten Gase und Dämpfe in die dem Glas-Schmelzofen (1) zugeführte Verbrennungsluft eingespeist werden.

6. Verfahren nach Anspruch 1, **dadurch gekennzeichnet**, daß die aus dem Beschickungsgut (16) freigesetzten Gase und Dämpfe in den Brennraum des Glas-Schmelzofens (1) eingespeist werden.

7. Verfahren nach Anspruch 1, **dadurch gekennzeichnet**, daß die aus dem Beschickungsgut (16) freigesetzten Gase und Dämpfe mindestens einem Brenner (4) des Glas-Schmelzofens (1) zugeführt werden.

8. Verfahren nach Anspruch 1, **dadurch gekennzeichnet**, daß die Abgase aus dem Glas-Schmelzofen (1) vor dem Eintritt in den indirekten Wärmetauscher (10) über einen Regenerativ- oder Rekuperativ-Wärmetauscher (8) geführt werden.

9. Vorrichtung zum Durchführen des Verfahrens nach Anspruch 1 mit einem indirekten Wärmetauscher (10), der mindestens einem Vorwärmschacht (11) für die Durchleitung des Beschickungsguts (16) und eine an den Vorwärmschacht (11) angrenzende und von diesem getrennte Heizkammer (12) für die Durchleitung eines Heizmediums aufweist, wobei dem Wärmetauscher (10) ein Glas-Schmelzofen (1) nachgeschaltet ist, dessen Abgasleitung (24) der Heizkammer (12) des Wärmetauschers (10) aufgeschaltet ist und dessen Einlegeöffnung (Dog-House 3) mit dem mindestens einen Vorwärmschacht (11) durch eine Fördereinrichtung (20) verbunden ist, **dadurch gekennzeichnet**, daß der mindestens eine Vorwärmschacht (11) über eine Schwelgas-Leitung (28) außerhalb der Glasschmelze mit dem Glas-Schmelzofen (1) verbunden ist.

10. Vorrichtung nach Anspruch 9, **dadurch gekennzeichnet**, daß die Schwelgas-Leitung (28) im unteren Bereich des Wärmetauschers mit dem Vorwärmschacht (11) verbunden ist.

11. Vorrichtung nach Anspruch 9, **dadurch gekennzeichnet**, daß in der Schwelgas-Leitung (28) ein Sauggebläse (31) angeordnet ist.

12. Vorrichtung nach Anspruch 9, **dadurch gekennzeichnet**, daß der mindestens eine Vorwärmschacht (11) in seinem oberen Bereich an eine Saugleitung (34) für Wasserdampf angeschlossen ist.

13. Vorrichtung nach Anspruch 9, **dadurch gekennzeichnet**, daß die Schwelgas-Leitung (28) in eine Luftzuführöffnung (7) für Verbrennungsluft mündet.

14. Vorrichtung nach Anspruch 9, **dadurch gekennzeichnet**, daß die Schwelgasleitung (28) mit dem Brennraum des Glas-Schmelzofens (1) verbunden ist.

15. Vorrichtung nach Anspruch 9, **dadurch gekennzeichnet**, daß die Schwelgasleitung (28) mit mindestens einem der Brenner (4) des Glas-Schmelzofens (1) verbunden ist.

## Claims

1. Process for pre-heating glass and charges (16) containing organic additives in an indirect heat exchanger (10), which comprises at least one pre-heating shaft (11) and a thereto adjacent heating chamber (12), to maximum temperatures just below the softening temperature of glass for subsequent placing in a glass melting furnace (1) whilst guiding the charge (16) in the at least one pre-heating shaft (11) and by loading the heating chamber (12) with waste gases from the glass melting furnace (1), **characterised in that** gases and vapours developed from the organic additives are at least partially introduced from the heat exchanger (10) outside the glass melt into the glass melting furnace (1).

2. Process according to Claim 1, **characterised in that** the release of the gases and vapours from the organic additives is carried out at a pressure below that of the environment.

3. Process according to Claim 2, **characterised in that** the charge (16) in the heat exchanger (10) is guided in the at least one vertically configured pre-heating shaft (11) from the top to the bottom, and gases and vapours are vacuumed from the lower area of this at least one pre-heating shaft (11).

4. Process according to Claim 3, **characterised in that** water vapour is vacuumed from the charge (16) at a point of the at least one pre-heating shaft (11) which is located above the vacuum point (27) provided for other gases and vapours in the range of a temperature at which no decomposition of the organic additives has taken place.

5. Process according to Claim 1, **characterised in that** gases and vapours released from the charge are fed into combustion air which is delivered to the glass melting furnace (1).

6. Process according to Claim 1, **characterised in that** gases and vapours released from the charge (16) are fed into the combustion chamber of the glass melting furnace (1).

7. Process according to Claim 1, **characterised in that** gases and vapours released from the charge (16) are fed to at least one torch (4) of the glass melting furnace (1).

8. Process according to Claim 1, **characterised in that** the waste gases from the glass melting furnace (1) are, prior to entry into the indirect heat exchanger (10), ducted via a regenerative or recuperative heat exchanger (8).

9. Apparatus for carrying out the process according to Claim 1 with an indirect heat exchanger (10), which comprises at least one pre-heating shaft (11) to be passed through by the charge (16) and a heating chamber (12), which is adjacent to and separated from the pre-heating shaft (11), for passing through a heating medium, and downstream of the heat exchanger (10) is a glass melting furnace (1) the waste gas pipe (24) of which is assigned to the heating chamber (12) of the heat exchanger (10) and the feed opening (Dog House 3) is connected by a conveying means (20) to the at least one pre-heating shaft (11), **characterised in that** the at least one pre-heating shaft (11) is connected to the glass melting surface (1) via a carbonisation gas pipe (28) outside the glass melt.

10. Apparatus according to Claim 9, **characterised in that** the carbonisation gas pipe (28) is connected to the pre-heating shaft (11) in the lower area of the heat exchanger.

11. Apparatus according to Claim 9, **characterised in that** a suction blower (31) is configured in the carbonisation gas pipe (28).

12. Apparatus according to Claim 9, **characterised in that** the at least one pre-heating shaft (11) is in its upper area connected to a vacuum pipe (34) for water vapour.

13. Apparatus according to Claim 9, **characterised in that** the carbonisation gas pipe (28) terminates in an air delivery opening (7) for combustion air.

14. Apparatus according to Claim 9, **characterised in that** the carbonisation gas pipe (28) is connected to the combustion chamber of the glass melting furnace (1)

15. Apparatus according to Claim 9, **characterised in that** the carbonisation gas pipe (28) is connected to at least one of the torches (4) of the glass melting furnace (1).

## Revendications

1. Procédé de préchauffage de verre et d'une charge de matières premières (16) contenant des constituants organiques, dans un échangeur de chaleur indirect (10), qui présente au moins un puits de préchauffage (11) et une chambre de chauffage (12) qui le jouxte, pour les porter à des températures jusqu'au maximum juste en-dessous de la température de ramollissement du verre pour les introduire ensuite dans un four de fusion du verre (1), sous condition du passage de la charge de matières premières (16) dans le puits de préchauffage (11) dont il y a au moins un et de l'exposition de la chambre de chauffe (12) à des gaz d'évacuation provenant du four de fusion (1), caractérisé par le fait que les gaz et les vapeurs formés à partir des constituants organiques sont, au moins partiellement, introduits, depuis l'échangeur de chaleur (10), dans le four de fusion du verre (1), en dehors du bain de fusion du verre.

2. Procédé selon la revendication 1, caractérisé par le fait que le dégagement des gaz et des vapeurs à partir des constituants organiques s'effectue sous une pression inférieure à la pression de l'environnement.

3. Procédé selon la revendication 2, caractérisé par le fait que la charge de matières premières (16) passe dans l'échangeur de chaleur (10), dans le puits de préchauffage (11) disposé verticalement, dont il y a au moins un, de haut en bas et que les gaz les vapeurs sont aspirés depuis la zone inférieure de ce puits de préchauffage (11) dont il y a au moins un.

4. Procédé selon la revendication 3, caractérisé par le fait que la vapeur d'eau provenant de la charge de matières premières (16) est aspirée à un endroit du puits de préchauffage (11), dont il y a au moins un, qui se trouve au-dessus de l'endroit d'aspiration (27) prévu pour les autres gaz et vapeurs, dans la zone d'une température à laquelle il ne s'est encore produit aucune décomposition des constituants organiques.

5. Procédé selon la revendication 1, caractérisé par le fait que les gaz et les vapeurs dégagés à partir de la charge de matières premières sont envoyés dans l'air de combustion amené au four de fusion du verre (1).

6. Procédé selon la revendication 1, caractérisé par le fait que les gaz et les vapeurs dégagés à partir de la charge de matières premières (16) sont envoyés dans le foyer du four de fusion du verre (1).

7. Procédé selon la revendication 1, caractérisé par le fait que les gaz et les vapeurs dégagés à partir de la charge de matières premières (16) sont amenés à au moins un brûleur (4) du four de fusion du verre (1).

8. Procédé selon la revendication 1, caractérisé par le fait qu'avant leur introduction dans l'échangeur de chaleur indirect (10), les gaz d'évacuation provenant du four de fusion du verre (1) passent par un échangeur de chaleur à régénération ou à récupération (8).

9. Appareil pour la mise en oeuvre du procédé de la revendication 1, comportant un échangeur de chaleur indireet (10) qui présente au moins un puits de préchauffage (11) pour le passage de la charge de matières premières (16) et une chambre de chauffage (12), qui jouxte le puits de préchauffage (11) et en est séparée, pour le passage d'une fluide chauffant, dans lequel à la suite de l'échangeur de chaleur (10) est monté un four de fusion du verre (1) dont la conduite (24) des gaz d'évacuation est reliée à la chambre de chauffage (12) de l'échangeur de chaleur (10) et dont l'ouverture d'introduction (Dog-House/Chapelle 3) est reliée au puits de préchauffage (11), dont il y a au moins un, par un dispositif de transport, caractérisé par le fait que le puits de préchauffage (11), dont il y a au moins un, est relié au four de fusion du verre (1), en dehors du bain de fusion du verre, par l'intermédiaire d'une conduite (28) de gaz de distillation à basse température.

10. Appareil selon la revendication 9, caractérisé par le fait que la conduite (28) de gaz de distillation à basse température est reliée au puits de préchauffage (11) dans la zone inférieure de l'échangeur de chaleur.

11. Appareil selon la revendication 9, caractérisé par le fait que dans la conduite (28) de gaz de distillation à basse température est disposé un ventilateur d'aspiration (31).

12. Appareil selon la revendication 9, caractérisé par le fait que le puits de préchauffage (11) dont il y a au moins un, est relié, dans sa zone supérieure, à une conduite d'aspiration (34) pour la vapeur d'eau.

13. Appareil selon la revendication 9, caractérisé par le fait que la conduite (28) de gaz de distillation à basse température débouche dans une ouverture (7) d'introduction de l'air de combustion.

14. Appareil selon la revendication 9, caractérisé par le fait que la conduite (28) de gaz de distillation à basse température est reliée au foyer du four de fusion du verre (1).

15. Appareil selon la revendication 9, caractérisé par le fait que la conduite (28) de gaz de distillation à basse température est reliée à au moins l'un des brûleurs (4) du four de fusion de verre (1).
